# EUROPÄISCHE PATENTSCHRIFT

(11) **EP 3 286 051 B1**
(45) Veröffentlichungstag und Bekanntmachung des Hinweises auf die Patenterteilung: **12.06.2019**
(21) Anmeldenummer: 16719354.9
(22) Anmeldetag: 20.04.2016
(51) Int. Cl.: B60T 13/26, B60T 8/17, B60T 13/38, B60T 13/68

(54) **PARKBREMSEINRICHTUNG FÜR KRAFTFAHRZEUGE**
PARKING BRAKE ARRANGEMENT FOR VEHICLES
ARRANGEMENT DE FREIN DE PARKING POUR VÉHICULES

(30) Priorität: 22.04.2015 DE 102015106150
(43) Veröffentlichungstag der Anmeldung: 28.02.2018
(73) Patentinhaber: KNORR-BREMSE Systeme für Nutzfahrzeuge GmbH, 80809 München (DE)
(72) Erfinder: MICHALSKI, Max, 85579 Neubiberg (DE)
(86) Internationale Anmeldenummer: PCT/EP2016/058737
(87) Internationale Veröffentlichungsnummer: WO 2016/169975

(56) Entgegenhaltungen:
- DE-A1-102006 054 433
- DE-A1-102010 021 911
- DE-A1-102010 026 875
- DE-A1-102013 006 860

## Beschreibung

Die vorliegende Erfindung betrifft eine Parkbremseinrichtung für Kraftfahrzeuge mit wenigstens einer Steuerventileinrichtung, mit wenigstens einem Relaisventil, mit wenigstens einer pneumatischen Bremsvorrichtung und mit wenigstens einem Anhängersteuermodul, wobei mittels der Steuerventileinrichtung das Relaisventil steuerbar ist und wobei mittels des Relaisventils wenigstens die pneumatische Bremsvorrichtung ansteuerbar ist.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d. h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Aus der DE 10 2009 059 816 A1 ist bereits eine gattungsgemäße Parkbremseinrichtung für Kraftfahrzeuge bekannt, bei der die Anhängersteuermodule im Bereich der Steuerleitungen für die Betriebsbremse des Kraftfahrzeugs angeordnet sind.

Eine derartige Anordnung im Bereich der Steuerleitungen für die Betriebsbremse des Kraftfahrzeugs geht mit einem variierenden Verhalten der elektrischen Parkbremse abhängig von den fahrzeugspezifisch unterschiedlichen Verrohrungslängen vom Steuerraum hin zu den Anhängersteuermodulen einher.

Darüber hinaus kann es aufgrund dieser Anordnung zu unterschiedlichen Betriebsdrücken für die Anhängerbremse(n) und für die Betriebsbremse kommen. Um ein unterschiedliches Bremsverhalten zu verhindern, sind auch hier aufwendige Ausgleichssysteme zu installieren.

Aus der DE 10 2013 006 860 A1 ist weiter ein pneumatisches System für Kraftfahrzeuge bekannt, bei dem z.B. im Zusammenhang mit einer gattungsgemäßen Parkbremseinrichtung ein Magnetventil der Luftaufbereitung auch für die Realisierung einer sog. Trailer-Test-Funktion zur Ansteuerung eines Anhängersteuermoduls mitbenutzt wird.

Es ist daher die Aufgabe der vorliegenden Erfindung, eine Parkbremseinrichtung der eingangs genannten Art in vorteilhafter Weise weiter zu bilden, insbesondere dahingehend, dass eine Parkbremseinrichtung einfacher aufgebaut sein kann.

Diese Aufgabe wird erfindungsgemäß gelöst durch eine Parkbremseinrichtung mit den Merkmalen des Anspruchs 1. Danach ist vorgesehen, dass die Parkbremseinrichtung für Kraftfahrzeuge wenigstens eine bistabile Steuerventileinrichtung, wenigstens ein Relaisventil, wenigstens eine pneumatische Bremsvorrichtung und wenigstens ein Anhängersteuermodul aufweist, wobei mittels der Steuerventileinrichtung das Relaisventil steuerbar ist und wobei mittels des Relaisventils wenigstens die pneumatische Bremsvorrichtung ansteuerbar ist und wobei das Anhängersteuermodul stromabwärts des Relaisventils angeordnet ist und wobei stromaufwärts des Anhängersteuermoduls im zum Anhängersteuermodul führenden Leitungszweig wenigstens ein Select-High-Ventil angeordnet ist.

Die Erfindung basiert auf dem Grundgedanken, dass das wenigstens eine Anhängersteuermodul oder die Anhängersteuermodule nicht mehr im Bereich der Steuerleitungen für die Ansteuerung der pneumatischen Bremsvorrichtung für das Kraftfahrzeug, also z.B. für das Zugfahrzeug, anzuordnen. Vielmehr soll das wenigstens eine Anhängersteuermodul in einem Bereich angeordnet werden, in dem auch die Bremsvorrichtung für das Kraftfahrzeug angeschlossen ist. Das wenigstens eine Anhängersteuermodul und die Bremsvorrichtung sollen ihre pneumatische Versorgung im selben Bereich erhalten. Durch die pneumatische Versorgung im selben bzw. identischen Bereich, nämlich hinter dem Relaisventil für die Ansteuerung der pneumatischen Bremsvorrichtung, also z.B. der Zugfahrzeug-Feststellbremse, haben sowohl das wenigstens eine Anhängersteuermodul als auch die pneumatische Bremsvorrichtung des Kraftfahrzeugs automatisch einen identischen Betriebsdruck.

Der Begriff stromaufwärts bzw. stromabwärts bezieht sich insbesondere und soweit nicht anderweitig abweichend definiert auf die Anordnung in Bezug auf die Druckluftquelle der Parkbremseinrichtung.

Dadurch, dass der Steuerdruck für das Anhängersteuermodul hinter dem Relaisventil abgegriffen und damit identisch ist mit dem Druck an der pneumatischen Bremsvorrichtung, also z.B. der Zugfahrzeug-Feststellbremse, reduziert sich bereits ohne weitere Sicherungssysteme die Gefahr, dass das Zugfahrzeug stärker bzw. früher bremst als der oder die Anhänger und es zu einem sicherheitskritischen Einknicken (sog. Jackknife-Effekt) des Fahrzeugzuges kommt. Der Aufbau der Parkbremseinrichtung kann somit insgesamt vereinfacht werden. Darüber hinaus wird auch eine größere Robustheit der Steuerleitungen für die Ansteuerung des Relaisventils und damit für die Ansteuerung der pneumatischen Bremsvorrichtung gegen Leckagen vom Anhängersteuermodul erreicht, so dass auch hier der Aufbau vereinfacht werden kann und auch die Anforderungen für das Anhängersteuermodul sinken, weshalb auch dieses im Aufbau weiter vereinfacht werden kann.

Das Select-High-Ventil dient zur Aussteuerung bzw. Durchschaltung des an den Ventileingängen anliegenden höheren Drucks. Dadurch kann das Anhängersteuermodul nicht nur über die über das Relaisventil laufende Zuleitung angesteuert werden. Durch den Einsatz des Select-High-Ventils ergibt sich die Möglichkeit einer gesonderten Ansteuerung und dies unabhängig vom Druckzustand in der über das Relaisventil laufende Zuleitung. Folglich wird es möglich, das Anhängersteuermodul unabhängig von der Bremseinrichtung anzusteuern.

Ein erster Eingang kann mit einer Leitung verbunden sein, die das Select-High-Ventil mit einem Ausgang des Relaisventils verbindet, und ein zweiter Eingang kann mit einer Leitung verbunden sein, über die das Select-High-Ventil gesondert ansteuerbar ist. Über den Anschluss des Select-High-Ventils mit dem Relaisventil wird es möglich, das Anhängersteuermodul mit demselben bzw. nahezu demselben Druckniveau anzusteuern wie die alle weiteren stromabwärts des Relaisventils angeordneten Bremseinrichtungen des Kraftfahrzeugs. Durch die weitere Anschlussmöglichkeit des zweiten Eingangs ergibt sich der Vorteil, dass das Select-High-Ventil und damit letztlich das Anhängersteuermodul gesondert und unabhängig von sämtlichen weiteren Bremseinrichtungen des Kraftfahrzeugs angesteuert werden kann.

Des Weiteren kann vorgesehen sein, dass der zweite Eingang des Select-High-Ventils mit einer Leitung verbunden ist, mittels derer das Select-High-Ventil mit einem Ventil einer Luftaufbereitungseinheit der Parkbremseinrichtung verbunden ist. Dies erlaubt eine vorteilhafte Mitbenutzung es bereits ohnehin vorhandenen Ventils. Das Ventil der Luftaufbereitungseinheit kann ein Magnetventil sein, beispielsweise ein 2/2-Wegeventil oder ein 3/2-Wegeventil.

Grundsätzlich ist aber auch denkbar, dass an Stelle der Luftaufbereitungseinheit eine andere bzw. beliebige funktionale Einheit des Kraftfahrzeugs eingesetzt wird, die an eine Druckluftversorgung angeschlossen ist und wenigstens ein Ventil aufweist, so dass das Anhängersteuermodul gesondert angesteuert werden kann und somit eine Mitbenutzung eines ohnehin vorhandenen Ventils ermöglicht wird.

Darüber hinaus kann vorgesehen sein, dass mittels des Ventils der Luftaufbereitungseinheit der Parkbremseinrichtung das Select-High-Ventil ansteuerbar ist, insbesondere wobei mittels des Ventils der Luftaufbereitungseinheit der Parkbremseinrichtung das Select-High-Ventil im Zusammenhang mit der Trailer-Test-Funktion ansteuerbar ist. Bei der Trailer-Test-Funktion wird beispielsweise eine alleinige Ansteuerung bzw. Aktivierung des Anhängersteuermoduls und der Bremse des Anhängers benötigt.

Des Weiteren kann vorgesehen sein, dass der zweite Eingang des Select-High-Ventils mit einer Leitung verbunden ist, die stromabwärts eines Rückschlagventils der Parkbremseinrichtung und stromaufwärts der bistabilen Steuerventileinrichtung abzweigt. Dadurch wird der zweite Eingang des Select-High-Ventils mit Druckluft auf einem Druckluftniveau versorgt, das bereits auf dem entsprechend den Anforderungen begrenzt wurde. Eine gesonderte Druckbegrenzung, z.B. der Einsatz eines Druckbegrenzers, ist somit nicht erforderlich.

In der Leitung stromaufwärts des Select-High-Ventils kann ein Sperrventil angeordnet sein. Dadurch kann noch einmal zusätzlich eine Absperrung dieser Leitung erfolgen. Das Sperrventil kann ein 2/2-Wegeventil oder ein 3/2-Wegeventil sein. Denkbar ist auch, dass das Sperrventil ein Magnetventil ist.

Darüber hinaus kann vorgesehen sein, dass das Select-High-Ventil parallel angeordnet ist zu einer Bypassleitung, die von der Leitung abzweigt und die Leitung mit dem Leitungszweig verbindet. Dadurch kann verhindert werden, dass die Leitung zum Select-High-Ventil nicht entlüftet werden kann.

Die Bypassleitung kann von der Leitung in einem Abschnitt abzweigen, der zwischen dem Ventil und dem Select-High-Ventil befindlich ist. Dadurch wird sichergestellt, dass auf jeden Fall der Abschnitt, der zwischen dem Ventil und dem Select-High-Ventil befindlich ist, entlüftet werden kann.

In der Leitung zwischen dem Select-High-Ventil und dem Anhängersteuermodul kann ein Sperrventil, insbesondere ein 2/2-Wegeventil angeordnet sein. Dadurch kann einfach das Anhängersteuermodul gesondert abgesperrt werden. Das Sperrventil kann ein Magnetventil sein.

Des Weiteren kann vorgesehen sein, dass das Anhängersteuermodul stromabwärts eines Leitungszweigs zu der pneumatischen Bremsvorrichtung angeordnet ist. Dadurch ist das Anhängersteuermodul nach der Bremsvorrichtung angeordnet. Dies erlaubt es, die pneumatische Bremsvorrichtung direkt nach dem Relaisventil anzuordnen. Außerdem ist die Betätigung der Bremsvorrichtung in jedem Fall unabhängig von der Betätigung des Anhängersteuermoduls.

In einer weiteren Ausführungsform kann stromaufwärts des Anhängersteuermoduls im bzw. am zum Anhängersteuermodul führenden Leitungszweig wenigstens ein Drucksensor angeordnet sein. Dadurch wird es möglich, den am Anhängersteuermodul anliegenden Druck zu messen. Dies ermöglicht beispielsweise eine kontinuierliche Überwachung des Anhängersteuermoduls und erlaubt z.B. auch eine Detektion von Leckagen.

Der Drucksensor kann beispielsweise stromabwärts des Select-High-Ventils und stromaufwärts des Anhängersteuermoduls angeordnet sein. Dies ermöglicht eine sehr genaue Messung des Arbeitsdrucks des Anhängersteuermoduls.

In den Steuerleitungen des Steuerventils kann kein Select-Low-Ventil angeordnet sein.

Ferner ist möglich, dass kein Select-Low-Ventil stromaufwärts des Relaisventils angeordnet ist.

Außerdem kann vorgesehen sein, dass kein Drucksensor stromabwärts des Steuerventils und/oder stromaufwärts des Relaisventils angeordnet ist.

Dadurch kann der Aufbau der Parkbremseinrichtung insgesamt vereinfacht werden.

Weitere Einzelheiten und Vorteile der vorliegenden Erfindung sollen nun anhand eines in den Zeichnungen dargestellten Ausführungsbeispiels näher erläutert werden.

Es zeigen:
- Figur 1:: eine schematische Darstellung eines Ausführungsbeispiels einer erfindungsgemäßen Parkbremseinrichtung 1 für Kraftfahrzeuge;
- Figur 2:: eine weitere schematische Darstellung eines zweiten Ausführungsbeispiels einer erfindungsgemäßen Parkbremseinrichtung 1 für Kraftfahrzeuge; und
- Figur 3:: eine schematische Darstellung eines dritten Ausführungsbeispiels einer erfindungsgemäßen Parkbremseinrichtung 1 für Kraftfahrzeuge.

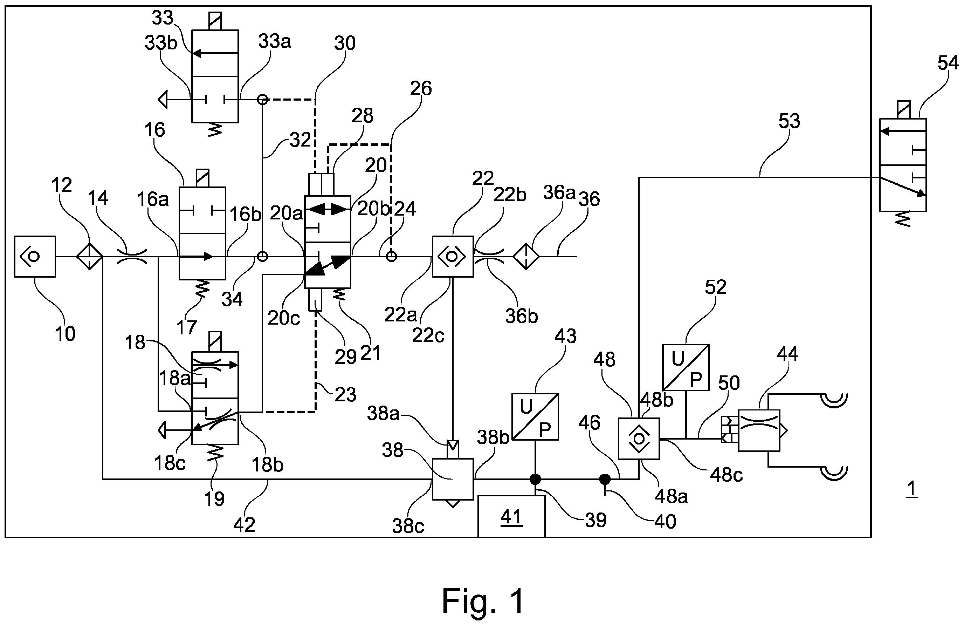

Figur 1 zeigt eine schematische Darstellung eines ersten Ausführungsbeispiels einer erfindungsgemäßen Parkbremseinrichtung 1 für Kraftfahrzeuge.

Die Parkbremseinrichtung 1 weist ein Rückschlagventil 10 auf, mittels dessen die Parkbremseinrichtung 1 an einer nicht näher dargestellten Druckluftversorgung angeschlossen ist.

Stromabwärts des Rückschlagventils 10 kann eine Filtereinheit 12 und eine Drossel 14 vorgesehen sein.

Die Parkbremseinrichtung 1 hat weiter ein erstes elektrisch steuerbares Magnetventil 16 und ein zweites elektrisch steuerbares Magnetventil 18, an deren Ausgängen ein pneumatisch steuerbares Steuerventil 20 angeschlossen ist.

Die beiden Magnetventile 16 und 18 sind über das Rückschlagventil 10 mit der nicht dargestellten Druckluftquelle des Fahrzeuges verbunden, über die Druckluft zuführbar ist.

Beide Magnetventile 16 und 18 werden jeweils durch eine Feder 17 bzw. 19 in eine Ruhelage gebracht.

Das Magnetventil 16 ist als sogenanntes 2/2-Wegeventil ausgebildet. Durch die Feder 17 ist das Magnetventil 16 monostabil und zwar stabil in der Ruhelage.

Grundsätzlich ist aber auch denkbar, dass das Magnetventil 16 als 3/2-Wegeventil ausgebildet ist. Eine derartige Konfiguration ist beispielsweise in der DE 10 2008 007 877 B3 gezeigt.

Das Magnetventil 18 ist ein sogenanntes 3/2-Wegeventil. Es ist zugleich auch als Steuer- und Entlüftungsventileinrichtung mit integrierter Drossel ausgebildet. Durch die Feder 19 ist das Magnetventil 18 monostabil und zwar stabil in der Ruhelage.

Denkbar ist auch, dass das Magnetventil 18 als einfaches monostabiles 2/2-Wegeventil ausgebildet sein kann (dann ohne Entlüftungsfunktion).

Ebenso wird das pneumatisch steuerbare Steuerventil 20 durch wenigstens eine Feder 21 in eine Ruhelage gebracht.

Das Steuerventil 20 ist als ein 3/2-Wegeventil ausgeführt. Es ist jedoch durch die Art seiner Verschaltung bistabil ausgelegt. Mögliche Ausführungsformen eines derartigen Steuerventils sind beispielsweise in der DE 10 2009 059 816 A1 oder in der WO 2014/009457 A1 gezeigt.

In Figur 1 sind jeweils die Ruhelagen dargestellt, bei denen die entsprechenden Ventile 16, 18 bzw. 20 deaktiviert sind.

Die Parkbremseinrichtung 1 befindet sich dabei im Parkmodus.

Das erste Magnetventil 16 hat einen Eingang 16a und einen Ausgang 16b.

In ähnlicher Weise hat das zweite Magnetventil 18 einen Eingang 18a, einen Ausgang 18b und einen Entlüftungsausgang 18c.

In der dargestellten Ruhelage verbindet das Magnetventil 16 den Eingang 16a mit dem Ausgang 16b.

Das zweite Magnetventil 18 sperrt in der dargestellten Ruhestellung den Eingang 18a ab und verbindet den Ausgang 18b mit dem Entlüftungsausgang 18c. In der aktivierten Position verbindet das zweite Magnetventil 18 dagegen den Eingang 18a mit dem Ausgang 18b, während der Entlüftungsausgang 18c abgesperrt ist.

Das pneumatisch gesteuerte Steuerventil 20 hat ebenfalls drei Anschlüsse und zwar einen Eingang 20a, einen Ausgang 20b und einen weiteren Anschluss 20c. Der Eingang 20a ist mit dem Ausgang 16b des ersten Magnetventils 16 verbunden. Der Ausgang 20b ist über eine Verbindungsleitung 24 mit einem Eingang 22a eines Select-High-Ventils 22 verbunden, während der Anschluss 20c mit dem Ausgang 18b des zweiten Magnetventils 18 verbunden ist.

Das pneumatisch steuerbare Steuerventil 20 sperrt in der abgebildeten Ruhestellung den Eingang 20a ab und verbindet den Ausgang 20b mit dem Anschluss 20c. In der aktivierten Stellung des Steuerventils 20 ist dagegen der Eingang 20a mit dem Ausgang 20b verbunden und der Anschluss 20c ist abgesperrt.

Das pneumatisch steuerbare Steuerventil 20 kann ein normales Pneumatikventil sein. Es kann auch ein pneumatisch steuerbares ServoVentil sein. Schließlich kann das Steuerventil 20 auch elektrisch steuerbar sein, d. h. es kann ein bistabiles elektrisch steuerbares Magnetventil sein.

Von der Verbindungsleitung 24 zweigt eine Steuerleitung 26 ab. Die Steuerleitung 26 ist mit einem pneumatischen Steuereingang 28 des Steuerventils 20 verbunden.

Eine weitere Steuerleitung 30 zum pneumatischen Steuereingang 28 des Steuerventils 20 zweigt von einer Verbindungsleitung 32 ab. Die Verbindungsleitung 32 zweigt von einer Verbindungsleitung 34 ab, die den Ausgang 16b des Magnetventils 16 mit dem Eingang 20a des Steuerventils 20 verbindet.

Die Verbindungsleitung 32 führt zu einem Entlüftungsventil 33, das ein 2/2-Wegeventil (Magnetventil) ist, und ist mit dessen Eingang 33a verbunden. Das Entlüftungsventil 33 weist weiter einen Entlüftungsausgang 33b auf. In der dargestellten Stellung ist der Entlüftungsausgang 33b gesperrt.

Ein zweiter Eingang 22b des Select-High-Ventils 22 ist mit einer pneumatischen Leitung 36 verbunden, die eine pneumatische Steuerleitung vom Bremspedal des Fahrzeugs ist und die mit Druck der Betriebsbremse des Fahrzeugs beaufschlagt ist. In der Steuerleitung 36 ist eine Filtereinheit 36a und eine Drossel 36b angeordnet.

Der Ausgang 22c des Select-High-Ventils 22 ist mit einem pneumatischen Steuereingang 38a eines Relaisventils 38 verbunden, dessen Ausgang 38b mit einer Zuleitung 39 zu der pneumatischen Bremsvorrichtung für das Kraftfahrzeug bzw. Zugfahrzeug und mit einer weiteren Leitung 40 verbunden ist.

Die pneumatische Bremsvorrichtung 41 des Kraftfahrzeugs bzw. Zugfahrzeugs kann eine Druckkammer eines Federspeicher-Bremszylinders (nicht näher dargestellt) aufweisen. Die Federspeicherbremse ist dann gelöst, wenn die genannte Druckkammer des Federspeicher-Bremszylinders mit Druckluft beaufschlagt ist. Umgekehrt ist die Parkbremse durch die Feder des Federspeicher-Bremszylinders aktiviert, wenn die genannte Druckkammer entlüftet ist.

Das Relaisventil 38 weist weiter einen Eingang 38c auf, der mit einer Druckluftanschlussleitung 42 verbunden ist, die stromabwärts der Filtereinheit 12 abzweigt. Somit ist der Versorgungseingang 38c des Relaisventils 38 über das Rückschlagventil 10 direkt mit der Druckluftversorgung der Parkbremseinrichtung 1 verbunden.

An der Abzweigung der Druckluftanschlussleitung 39 ist auch ein Druckluftsensor 43 vorgesehen.

Stromabwärts des Relaisventils 38 ist neben der pneumatischen Bremsvorrichtung 41 für das Kraftfahrzeug bzw. Zugfahrzeug auch ein Anhängersteuermodul 44 angeordnet.

Das Anhängersteuermodul 44 ist dabei stromabwärts des Leitungszweigs 39 zu der pneumatischen Bremsvorrichtung 41 angeordnet.

Des Weiteren ist stromaufwärts des Anhängersteuermoduls 44 im zum Anhängersteuermodul 44 führenden Leitungszweig 46 wenigstens ein weiteres Select-High-Ventil 48 angeordnet.

Stromaufwärts des Anhängersteuermoduls 44 ist im zum Anhängersteuermodul führenden Leitungszweig 50 wenigstens ein Drucksensor 52 angeordnet und zwar stromabwärts des Select-High-Ventils 48 und stromaufwärts des Anhängersteuermoduls 44.

Das Select-High-Ventil 48 weist einen ersten Eingang 48a, einen zweiten Eingang 48b und einen Ausgang 48c auf.

Der erste Eingang 48a ist mit dem Leitungszweig 46 verbunden.

Der zweite Eingang 48b ist mit einer Steuerleitung 53 verbunden, über die das Select-High-Ventil 48 mittels eines Magnetventils 54 ansteuerbar ist. Das Magnetventil 54 ist ein EAC-Ventil 54 des Luftaufbereitungssystems 56 der Parkbremseinrichtung 1.

Somit ist ein Eingang, nämlich der Eingang 48b des Select-High-Ventils 48, mit einem Ventil des Luftaufbereitungssystems 56 der Parkbremseinrichtung 1 verbunden.

Mittels dieses Ventils 54 der Luftaufbereitungseinheit 56 der Parkbremseinrichtung 1 ist das Select-High-Ventil 48 ansteuerbar, insbesondere wobei mittels des Ventils 54 der Luftaufbereitungseinheit 56 der Parkbremseinrichtung 1 das Select-High-Ventil 48 im Zusammenhang mit der Trailer-Test-Funktion ansteuerbar ist.

Wie in der Figur ersichtlich, ist in den Steuerleitungen des Steuerventils 20 kein Select-Low-Ventil und auch kein Select-Low-Ventil stromaufwärts des Relaisventils 38 angeordnet.

Des Weiteren ist auch kein Drucksensor stromabwärts des Steuerventils 20 und/oder stromaufwärts des Relaisventils 38 angeordnet.

Im Folgenden wird die Wirkungsweise der Parkbremseinrichtung 1 gemäß Figur 1 erläutert.

Die Einrichtung hat zwei sichere, stabile Zustände, nämlich den normalen Fahrtzustand und den Zustand der aktivierten Parkbremse (wie in Figur 1 gezeigt). Bei Ausfall der elektrischen Versorgung wird der unmittelbar dem Ausfall vorhergehende Zustand stabil beibehalten.

Die Sicherheitsfunktion wird durch das bistabile Steuerventil 20 realisiert. Dieses Steuerventil 20 wird in der in Figur 1 dargestellten Parkstellung durch die Feder 21 gehalten. Die Anschlüsse 20b und 20c des Steuerventils 20 sind verbunden und über das zweite Magnetventil 18 über den Eingang 18b zu dessen Entlüftungsausgang 18c hin entlüftet.

Über eine Steuerleitung 23 (gestrichelt eingezeichnet) wird Atmosphärendruck an den pneumatischen Steuereingang 29 des Steuerventils 20 und auch an den Steuereingang 28 über die Steuerleitung 26 angelegt, so dass das Steuerventil 20 deaktiviert und durch die Feder 21 in die dargestellte Stellung gebracht ist. Dies ist einer der zwei stabilen Zustände des Steuerventils 20.

In der Parkposition ist auf der Leitung 36 normalerweise kein Druck (Betriebsbremse deaktiviert), so dass über das Select-High-Ventil 22 ebenfalls Atmosphärendruck an den pneumatischen Steuereingang 38a des Relaisventils 38 gelangt. Dieses ist damit entlüftet, so dass auch die Federkammer des Federspeicher-Bremszylinders (nicht näher dargestellt, über die Leitung 42 angeschlossen) entlüftet ist und damit die Parkbremse angelegt bzw. aktiviert ist.

Bei deaktivierter Parkbremse, d. h. im Fahrzustand, ist das Steuerventil 20 durchgeschaltet, d. h. aktiviert. Der Eingang 20a ist dann mit dem Ausgang 20b verbunden. In diesem Zustand werden die Steuereingänge 28 und 29 des Steuerventils 20 mit Druck beaufschlagt, so dass das Steuerventil 20 stabil in diesem Zustand gehalten wird.

Über das aktivierte Steuerventil 20 gelangt Druck von der Druckmittelquelle über das Rückschlagventil 10 auch zum Steuereingang 38a des Relaisventils 38, welches durchschaltet und damit die Federkammer des Federspeicher-Bremszylinders der Betriebsbremse des Kraftfahrzeugs bzw. Zugfahrzeugs über die Leitung 42 mit Druck beaufschlagt und damit die Betriebsbremse löst. Somit ist die Sicherheitsfunktion realisiert, d. h. beide beschriebenen Betriebszustände sind jeweils für sich stabil, unabhängig von dem Zustand der Stromversorgung der Magnetventile 16 und 18.

### Umschalten von Parkbremse auf Fahrzustand

Durch Betätigen des zweiten Magnetventils 18 wird dessen Eingang 18a mit dem Ausgang 18b verbunden. Damit gelangt Druckluft aus der Druckmittelquelle über das Rückschlagventil 10 zum Anschluss 20c des Steuerventils 20, von dessen Ausgang 20b zur Steuerleitung 26. Somit gelangt hoher Druck über die Steuerleitung 26 zum Steuereingang 28. Da auch das Magnetventil 16 durchgeschaltet ist, gelangt auch über die Steuerleitung 30 hoher Druck zum Steuereingang 28. Auch über die Steuerleitung 23 gelangt hoher Druck zum weiteren Steuereingang 29 des Steuerventils 20. Dadurch wird das Steuerventil 20 durchgeschaltet und der Eingang 20a mit dem Ausgang 20b verbunden.

Über das Select-High-Ventil 22 gelangt dieser Druck an den Steuereingang 38a des Relaisventils 38, das durchschaltet und somit den Druck von seinem Eingang 38c zur Federkammer des Federspeicher-Bremszylinders über die Leitung 42 gelangen lässt, so dass die Betriebsbremse des Kraftfahrzeugs bzw. Zugfahrzeugs gelöst wird. Das Steuerventil 20 ist dann in der zweiten, durch Druck gehaltenen stabilen Position.

### Umschalten vom Fahrzustand zur Parkbremse

Das Umschalten vom Fahrzustand zur Parkbremse erfolgt durch das erste Magnetventil 16 und durch das zweite Magnetventil 18 sowie über das Entlüftungsventil 33. Wird das erste Magnetventil 16 aktiviert, so wird sein Eingang 16a und sein Ausgang 16b abgesperrt. Außerdem wird das zweite Magnetventil 18 derart geschaltet, dass der Eingang 18a gesperrt und die Ausgänge 18b und 18c miteinander verbunden sind. Somit kann Druck über den Entlüftungsausgang 18c entweichen. Da auch das Entlüftungsventil 33 derart geschaltet wird, dass der Eingang 33a und der Ausgang 33b miteinander verbunden sind, so dass über den Entlüftungsausgang 33b entlüftet werden kann, sinkt der Druck in den Steuerleitungen 23 und 30 ab.

Sobald dieser Druck einen vorgegebenen Schwellwert erreicht hat, der unter Anderem durch die Kraft der Feder 21 einstellbar ist, schaltet das Steuerventil 20 in die in Figur 1 gezeigte Ruhestellung zurück.

Der vorgegebene Schwellwert ist dazu erforderlich, dem System zu ermöglichen, zwischen Umschaltung auf Parkbremse und proportionalem Bremsen zu unterscheiden. Das Relaisventil 38 erhält an seinem Steuereingang 38a ebenfalls diesen niedrigen Druck. Es wird dadurch in die Entlüftungsstellung gebracht, wodurch die Federkammer des Federspeicher-Bremszylinders der Betriebsbremse entlüftet und damit die Parkbremse aktiviert wird.

### Trailer Test

Für die Trailer-Test-Funktion befindet sich die Parkbremseinrichtung beispielsweise in der Fahrstellung (siehe vorstehende Beschreibung). Durch das Magnetventil 54 bzw. EAC-Ventil 54 wird Druck zum Anhängersteuermodul 44 durchgeschaltet. Im Ergebnis wird die Parkbremse am Trailer bzw. Anhänger gelöst, was für den Trailer-Test erforderlich ist.

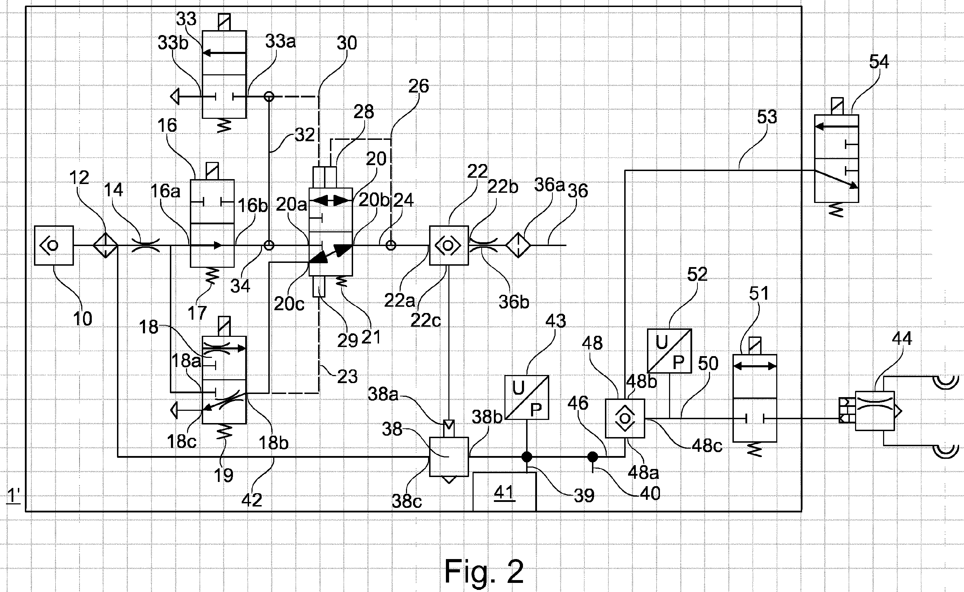

Figur 2 zeigt ein zweites Ausführungsbeispiel einer erfindungsgemäßen Parkbremseinrichtung 1', die im Wesentlichen strukturell und funktional identisch ist mit der vorstehend im Zusammenhang mit Figur 1 beschriebenen Parkbremseinrichtung 1. Identische Merkmale bzw. Elemente sind mit identischen Bezugszeichen wie in Figur 1 bezeichnet.

Jedoch bestehen die folgenden Unterschiede:
In der Zuleitung 50 zwischen dem Select-High-Ventil 48 und dem Anhängersteuermodul 44 befindet sich ein Sperrventil 51.

Das Sperrventil 51 ist im gezeigten Ausführungsbeispiel als Magnetventil ausgeführt, nämlich als 2/2-Wegeventil 51.

Mittels des Sperrventils 51 kann die Leitung 50 bei Bedarf gesperrt werden.

In der Ruhestellung des Sperrventils 51 ist dabei die Leitung 50 gesperrt.

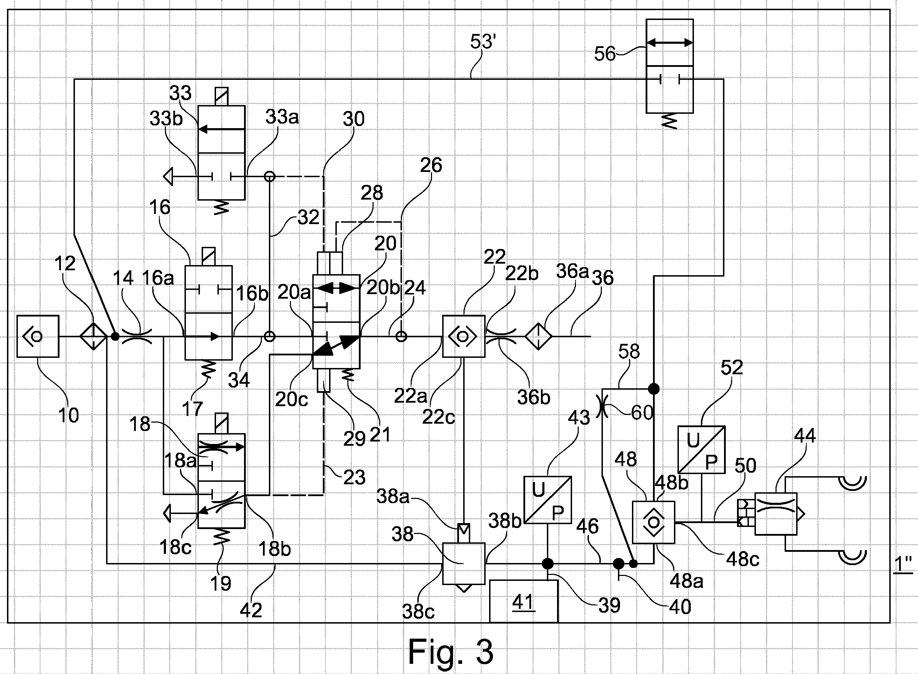

Figur 3 zeigt ein drittes Ausführungsbeispiel einer erfindungsgemäßen Parkbremseinrichtung 1", das nahezu und im Wesentlichen identisch mit der in Figur 1 beschriebenen Parkbremseinrichtung 1 ist, und zwar in struktureller als auch in funktioneller Hinsicht. Identische Merkmale bzw. Elemente sind mit identischen Bezugszeichen wie in Figur 1 bezeichnet.

Jedoch weist die in Figur 3 gezeigte Ausführungsform folgende Unterschiede auf:
Anstelle der Leitung 53 ist eine Leitung 53' vorgesehen, die den Anschluss 48b des Select-High-Ventils 48 mit einem Leitungsabschnitt der Parkbremseinrichtung 1" verbindet, der stromabwärts des Rückschlagventils 10 liegt und stromaufwärts der Magnetventile 16 und 18.

In der Leitung 53' befindet sich ein Sperrventil 56, das hier als Magnetventil ausgeführt ist. Das Sperrventil 56 ist ein 2/2-Wegeventil. Denkbar ist aber auch, dass das Sperrventil 56 als ein 3/2-Wegeventil ausgeführt ist.

In dem Leitungsabschnitt zwischen dem Sperrventil 56 und dem Select-High-Ventil 48 zweigt eine Bypassleitung 58 ab, die die Leitung 53' mit der Leitung 46 verbindet.

In der Leitung 58 befindet sich eine Drossel 60.

Durch den Umstand, dass die Leitung 53' direkt stromabwärts nach dem Rückschlagventil 10 abzweigt, ergibt sich der Vorteil, dass auf dieser Leitung 53' kein erhöhter Druck anliegt, sondern der dort anliegende Druck bereits begrenzt ist.

Über die Leitung 53' kann gesondert das Select-High-Ventil 48 angesteuert und damit auch das Anhängersteuermodul 48 angesteuert werden. Für die Ansteuerung selbst wird das Sperrventil 56 genutzt, das in seiner Ruhestellung sperrt und bei Bestromung die Leitung 53' freigibt.

Um bei gesperrtem Ventil 56 den Leitungsabschnitt zwischen dem Ventil 56 und dem Select-High-Ventil 48 entlüften zu können, ist die Bypassleitung 58 vorgesehen, die wiederum eine Drossel 60 aufweist.

Über die Drossel 60 wird verhindert, dass bei Ansteuerung des Select-High-Ventils 48 über die Leitung 53' kein ausreichender Druck für die Ansteuerung des Select-High-Ventils 48 aufgebaut werden kann.

## Patentansprüche

1. Parkbremseinrichtung (1) für Kraftfahrzeuge mit wenigstens einer bistabilen Steuerventileinrichtung (20), mit wenigstens einem Relaisventil (38), mit wenigstens einer pneumatischen Bremsvorrichtung (41) und mit wenigstens einem Anhängersteuermodul (44), wobei mittels der Steuerventileinrichtung (20) das Relaisventil (38) steuerbar ist und wobei mittels des Relaisventils (38) wenigstens die pneumatische Bremsvorrichtung (41) ansteuerbar ist, wobei stromaufwärts des Anhängersteuermoduls in einem zum Anhängersteuermodul (44) führenden Leitungszweig (46) wenigstens ein Select-High-Ventil (48) angeordnet ist, **dadurch gekennzeichnet,**
**dass** das Anhängersteuermodul (44) stromabwärts des Relaisventils (38) angeordnet ist und dass stromaufwärts des Anhängersteuermoduls (44) im zum Anhängersteuermodul (44) führenden Leitungszweig (46) wenigstens ein Select-High-Ventil (48) angeordnet ist.

2. Parkbremseinrichtung (1) nach Anspruch 1, **dadurch gekennzeichnet, dass** ein erster Eingang (48a) mit einer Leitung (46) verbunden ist, die das Select-High-Ventil (48) mit einem Ausgang (38b) des Relaisventils (38) verbindet, und dass ein zweiter Eingang (48b) mit einer Leitung verbunden ist, über die das Select-High-Ventil (48) gesondert ansteuerbar ist.

3. Parkbremseinrichtung (1) nach Anspruch 2, **dadurch gekennzeichnet, dass** der zweite Eingang (48b) des Select-High-Ventils (48) mit einer Leitung (53) verbunden ist, mittels derer das Select-High-Ventil (48) mit einem Ventil (54) einer Luftaufbereitungseinheit der Parkbremseinrichtung (1) verbunden ist.

4. Parkbremseinrichtung (1) nach Anspruch 3, **dadurch gekennzeichnet, dass** mittels des Ventils (54) der Luftaufbereitungseinheit der Parkbremseinrichtung (1) das Select-High-Ventil (48) ansteuerbar ist, insbesondere wobei mittels des Ventils (54) der Luftaufbereitungseinheit der Parkbremseinrichtung (1) das Select-High-Ventil (48) im Zusammenhang mit der Trailer-Test-Funktion ansteuerbar ist.

5. Parkbremseinrichtung (1) nach Anspruch 2, **dadurch gekennzeichnet, dass** der zweite Eingang (48b) des Select-High-Ventils (48) mit einer weiteren Leitung (53') verbunden ist, die stromabwärts eines Rückschlagventils (10) der Parkbremseinrichtung (1) und stromaufwärts der bistabilen Steuerventileinrichtung (20) abzweigt.

6. Parkbremseinrichtung (1) nach Anspruch 5, **dadurch gekennzeichnet, dass** in der weiteren Leitung (53') stromaufwärts des Select-High-Ventils (48) ein Sperrventil (56) angeordnet ist.

7. Parkbremseinrichtung (1) nach Anspruch 6, **dadurch gekennzeichnet, dass** das Select-High-Ventil (48) parallel angeordnet ist zu einer Bypassleitung (58), die von der weiteren Leitung (53') abzweigt und die weitere Leitung (53') mit dem Leitungszweig (46) verbindet.

8. Parkbremseinrichtung (1) nach Anspruch 7, **dadurch gekennzeichnet, dass** die Bypassleitung (58) von der weiteren Leitung (53') in einem Abschnitt abzweigt, der zwischen dem Ventil (56) und dem Select-High-Ventil (48) befindlich ist.

9. Parkbremseinrichtung (1) nach einem der vorhergehenden Ansprüche, **dadurch gekennzeichnet, dass** in der Leitung (50) zwischen dem Select-High-Ventil (48) und dem Anhängersteuermodul (44) ein Sperrventil (51), insbesondere ein 2/2-Wegeventil angeordnet ist.

10. Parkbremseinrichtung (1) nach einem der vorgehenden Ansprüche, **dadurch gekennzeichnet, dass** das Anhängersteuermodul (44) stromabwärts eines Leitungszweigs (42) zu der pneumatischen Bremsvorrichtung (41) angeordnet ist.

11. Parkbremseinrichtung (1) nach einem der vorhergehenden Ansprüche, **dadurch gekennzeichnet, dass** stromaufwärts des Anhängersteuermoduls (44) im bzw. am zum Anhängersteuermodul (44) führenden Leitungszweig wenigstens ein Drucksensor (52) angeordnet ist.

12. Parkbremseinrichtung (1) nach Anspruch 11, **dadurch gekennzeichnet, dass** der Drucksensor (52) stromabwärts des Select-High-Ventils (48) und stromaufwärts des Anhängersteuermoduls (44) angeordnet ist.

13. Parkbremseinrichtung (1) nach einem der vorhergehenden Ansprüche, **dadurch gekennzeichnet, dass** ein Eingang des Select-High-Ventils (48) mit einem Ventil (54) einer weiteren funktionalen Einheit, insbesondere einer Luftaufbereitungseinheit der Parkbremseinrichtung (1) verbunden ist.

14. Parkbremseinrichtung (1) nach einem der vorhergehenden Ansprüche, **dadurch gekennzeichnet, dass** in den Steuerleitungen des Steuerventils (20) kein Select-Low-Ventil angeordnet ist.

15. Parkbremseinrichtung (1) nach einem der vorhergehenden Ansprüche, **dadurch gekennzeichnet, dass** kein Select-Low-Ventil stromaufwärts des Relaisventils (38) angeordnet ist.

16. Parkbremseinrichtung (1) nach einem der vorhergehenden Ansprüche, **dadurch gekennzeichnet, dass** kein Drucksensor stromabwärts des Steuerventils (20) und/oder stromaufwärts des Relaisventils (38) angeordnet ist.

## Claims

1. Parking brake device (1) for motor vehicles, having at least one bistable control valve device (20), at least one relay valve (38), at least one pneumatic brake apparatus (41) and at least one trailer control module (44), wherein the relay valve (38) is controllable by means of the control valve device (20), and wherein at least the pneumatic brake apparatus (41) is actuable by means of the relay valve (38), wherein at least one select-high valve (48) is arranged upstream of the trailer control module (44) in a line branch (46) leading to the trailer control module (44), **characterised in that** the trailer control module (44) is arranged downstream of the relay valve (38) and **in that** at least one select-high valve (48) is arranged upstream of the trailer control module (44) in the line branch (46) leading to the trailer control module (44).

2. Parking brake device (1) according to claim 1, **characterised in that** a first inlet (48a) is connected to a line (46) which connects the select-high valve (48) to an outlet (38b) of the relay valve (38), and **in that** a second inlet (48b) is connected to a line via which the select-high valve (48) is separately actuable.

3. Parking brake device (1) according to claim 2, **characterised in that** the second inlet (48b) of the select-high valve (48) is connected to a line (53) by means of which the select-high valve (48) is connected to a valve (54) of an air treatment unit of the parking brake device (1).

4. Parking brake device (1) according to claim 3, **characterised in that** the select-high valve (48) is actuable by means of the valve (54) of the air treatment unit of the parking brake device (1), wherein in particular, the select-high valve (48) is actuable in conjunction with the trailer test function by means of the valve (54) of the air treatment unit of the parking brake device (1).

5. Parking brake device (1) according to claim 2, **characterised in that** the second inlet (48b) of the select-high valve (48) is connected to a further line (53') which branches off downstream of a check valve (10) of the parking brake device (1) and upstream of the bistable control valve device (20).

6. Parking brake device (1) according to claim 5, **characterised in that** a shut-off valve (56) is arranged in the further line (53') upstream of the select-high valve (48).

7. Parking brake device (1) according to claim 6, **characterised in that** the select-high valve (48) is arranged in parallel with respect to a bypass line (58) which branches off from the further line (53') and which connects the further line (53') to the line branch (46).

8. Parking brake device (1) according to claim 7, **characterised in that** the bypass line (58) branches off from the further line (53') in a section which is situated between the valve (56) and the select-high valve (48).

9. Parking brake device (1) according to any of the preceding claims, **characterised in that** a shut-off valve, in particular a 2/2-way valve, is arranged in the line (50) between the select-high valve (48) and the trailer control module (44).

10. Parking brake device (1) according to any of the preceding claims, **characterised in that** the trailer control module (44) is arranged downstream of a line branch (42) to the pneumatic brake apparatus (41).

11. Parking brake device (1) according to any of the preceding claims, **characterised in that** at least one pressure sensor (52) is arranged upstream of the trailer control module (44) in or on the line branch leading to the trailer control module (44).

12. Parking brake device (1) according to claim 11, **characterised in that** the pressure sensor (52) is arranged downstream of the select-high valve (48) and upstream of the trailer control module (44).

13. Parking brake device (1) according to any of the preceding claims, **characterised in that** an inlet of the select-high valve (48) is connected to a valve (54) of a further functional unit, in particular of an air treatment unit of the parking brake device (1).

14. Parking brake device (1) according to any of the preceding claims, **characterised in that** no select-low valve is arranged in the control lines of the control valve (20).

15. Parking brake device (1) according to any of the preceding claims, **characterised in that** no select-low valve is arranged upstream of the relay valve (38).

16. Parking brake device (1) according to any of the preceding claims, **characterised in that** no pressure sensor is arranged downstream of the control valve (20) and/or upstream of the relay valve (38).

## Revendications

1. Dispositif (1) de frein de stationnement de véhicules automobiles, comprenant au moins un dispositif (20) bistable de soupape de commande,' comprenant au moins une vanne (38) relais, comprenant au moins un système (41) pneumatique de frein et comprenant au moins un module (44) de commande de remorque, dans lequel la vanne (38) relais peut être commandée au moyen du dispositif (2.0) de soupape de commande et dans lequel au moins le système (41) pneumatique de frein peut être commandé au moyen de la vanne (38) relais, dans lequel au moins une soupape (48) select-high est montée en amont du module de commande de remorque dans une branche (46) de conduit menant au module (44) de commande de remorque, **caractérisé en ce que** le module (44) de commande de remorque est monté en aval de la vanne (38) relais et **en ce qu'**au moins une soupape (48) select-high est montée en amont du module (44) de commande de remorque dans la branche (46) de conduit menant au module (44) de commande de remorque.

2. Dispositif (1) de frein de stationnement suivant la revendication 1, **caractérisé en ce qu'**une première entrée (48a) est reliée à un conduit (46), qui relie la soupape (48) select-high à une sortie (38b) de la vanne (38) relais, et **en ce qu'**une deuxième entrée (48b) est reliée à un conduit par lequel la soupape (48) select-high peut être commandée séparément.

3. Dispositif (1) de frein de stationnement suivant la revendication 2, **caractérisé en ce que** la deuxième entrée (48b) de la soupape (48) select-high est reliée à un conduit (53) au moyen duquel la soupape (48) select-high est reliée à une soupape (54) d'une unité de préparation d'air du dispositif (1) de frein de stationnement.

4. Dispositif (1) de frein de stationnement suivant la revendication 3, **caractérisé en ce que** la soupape (48) select-high peut être commandée au moyen de la soupape (54) de l'unité de préparation d'air du dispositif (1) de frein de stationnement, dans lequel, notamment, la soupape (48) select-high peut, au moyen de la soupape (54) de l'unité de préparation d'air du dispositif (1) de frein de stationnement, être commandée en liaison avec la fonction trailer-test.

5. Dispositif (1) de frein de stationnement suivant la revendication 2, **caractérisé en ce que** la deuxième entrée (48b) de la soupape (48) select-high est reliée à un autre conduit (53'), qui bifurque en aval d'un premier clapet antiretour (10) du dispositif (1) de frein de stationnement et en amont du dispositif (20) bistable de soupape de commande.

6. Dispositif (1) de frein de stationnement suivant la revendication 5, **caractérisé en ce que**, dans l'autre i conduit (53'), une vanne (56) d'arrêt est montée en amont de la vanne (48) select-high.

7. Dispositif (1) de frein de stationnement suivant la revendication 6, **caractérisé en ce que** la vanne (48) select-high est montée en parallèle à un conduit (58) de dérivation, qui bifurque de l'autre conduit (53') et qui relie l'autre conduit (53') à la branche (46) de conduit.

8. Dispositif (1) de frein de stationnement suivant la revendication 7, **caractérisé en ce que** le conduit (58) de dérivation bifurque de l'autre conduit (53') en un tronçon, qui se trouve entre la soupape (56) et la soupape (48) select-high.

9. Dispositif (1) de frein de stationnement suivant l'une des revendications précédentes, **caractérisé en ce qu'**une soupape (51) d'arrêt, notamment une soupape à 2/2 voies, est montée dans le conduit (50) entre la soupape (48) select-high et le module (44) de commande de remorque.

10. Dispositif (1) de frein de stationnement suivant l'une des revendications précédentes, **caractérisé en ce que** le module (44) de commande de remorque est monté en aval d'une branche (42) de conduit menant au système (41) pneumatique de frein.

11. Dispositif (1) de frein de stationnement suivant l'une des revendications précédentes, **caractérisé en ce qu'**au moins un capteur (52) de pression est monté en amont du module (44) de commande de remorque dans ou sur la branche de conduit menant au module (44) de commande de remorque.

12. Dispositif (1) de frein de stationnement suivant la revendication 11, **caractérisé en ce que** le capteur (52) de pression est monté en aval de la soupape (48) select-high et en amont du module (44) de commande de remorque.

13. Dispositif (1) de frein de stationnement suivant l'une des revendications précédentes, **caractérisé en ce qu'**une entrée de la soupape (48) select-high est reliée à une soupape (54) d'une autre unité fonctionnelle, notamment d'une unité de préparation d'air du dispositif (1) de frein de stationnement.

14. Dispositif (1) de frein de stationnement suivant l'une des revendications précédentes, **caractérisé en ce qu'**une soupape select-low n'est pas montée dans les conduits de commande de la soupape (20) de commande.

15. Dispositif (1) de frein de stationnement suivant l'une des revendications précédentes, **caractérisé en ce qu'**une soupape select-low est montée en amont de la vanne (38) relais.

16. Dispositif (1) de frein de stationnement suivant l'une des revendications précédentes, **caractérisé en ce qu'**un capteur de pression n'est pas monté en aval de la vanne (20) de commande et/ou en amont de la vanne (38) relais.
